# EUROPEAN PATENT APPLICATION

(11) **EP 3 881 811 A1**
(43) Date of publication of application: **22.09.2021**
(21) Application number: 19789572.5
(22) Date of filing: 27.03.2019
(51) Int. Cl.: A61F 9/08, H04M 1/725, G06K 9/20, G10L 13/08, G10L 15/26, G06N 3/08, H04N 21/488

(54) **DEEP LEARNING-BASED IMAGE ANALYSIS METHOD, SYSTEM, AND PORTABLE TERMINAL**

(30) Priority: 14.11.2018 KR 20180140149; 25.03.2019 KR 20190033441
(71) Applicant: TUAT. CO.,LTD, Buk-gu Daegu 41585 (KR)
(72) Inventor: CHO, Soo Won, Daegu 42259 (KR)
(74) Representative: González López-Menchero, Álvaro Luis
(86) International application number: PCT/KR2019/003581
(87) International publication number: WO 2020/101121

(57) **Abstract**

The present invention relates to an image analysis method, system and mobile terminal based on deep learning. An image analysis server based on deep learning according to an embodiment of the present invention is configured to include an image analysis mobile terminal for photographing an image and transmitting the photographed image; and an image analysis server for receiving the photographed image, generating analysis result values through neural networks corresponding to multiple functions, incorporating priorities according to weight into probability values of the generated analysis result values, and providing result values to the image analysis mobile terminal.

## Description

### [Technical Field]

An embodiment of the present invention relates to an image analysis method, system and mobile terminal based on deep learning.

### [Background Art]

A deep learning technology is an artificial intelligence (AI) technology which enables a computer to think and learn like human beings. A machine autonomously learns and solves a complicated non-linear problem based on an AI neural network theory.

Deep learning is a technology for training a computer to distinguish between things by simulating an information processing method for the human brain to discover a pattern numerous data and to distinguish things.

If the deep learning technology is applied, a computer can autonomously recognize, infer and determine a thing although the human beings do not determine all determination criteria. Accordingly, the deep learning technology may be widely used for voice and image recognition and photo analysis.

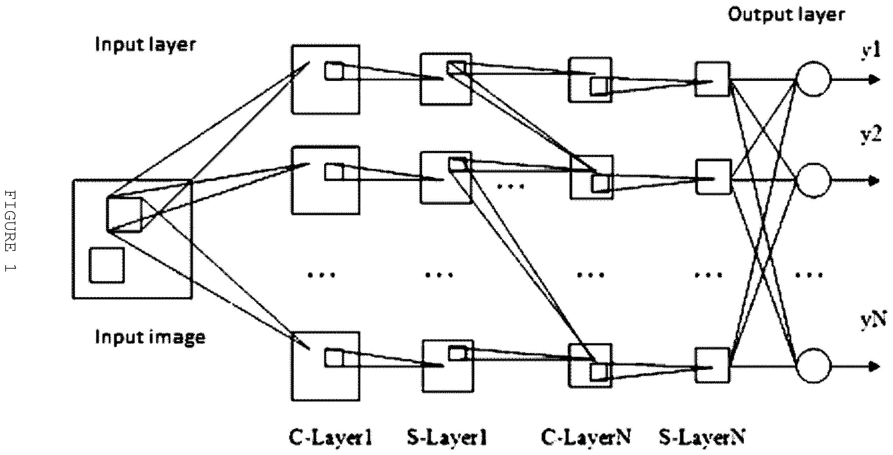

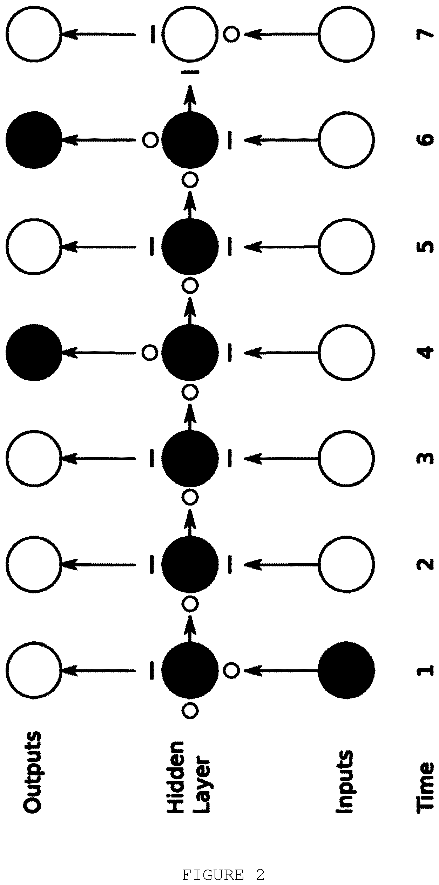

FIGS. 1 and 2 are diagrams for illustrating a common deep learning technology.

Referring to FIG. 1, a convolutional neural network (CNN) is simulated from a human brain structure, and models a gathering of single nodes as if the human brain is composed of neurons, that is, a minimum unit.

Furthermore, referring to FIG. 2, a long short-term memory (LSTM) uses information that has been received right before as if the human being does not think after all contents are received in a thinking method. A typical recurrent neural network (RNN) method has a problem in that dependency is low as a gap increases like information before several steps not information right before. Accordingly, four interactive layers are repeated so that information can be memorized for a long time.

However, if such a conventional deep learning technology is used for image analysis, an image is analyzed through each deep learning technology and thus fragmentary image analysis is performed. Accordingly, there are problems in that it is difficult to derive analysis results suitable for an image, each function must be driven to capture an image whenever the function is used for each image analysis method, and various and useful results, such as image description, face recognition, and text recognition, are not provided for one input image.

### [Disclosure]

### [Technical Problem]

The present invention has been made to solve the above problems, and it is an object of the present invention to provide result values more rapidly, conveniently and efficiently in such a manner that each neural network divides an image into several steps from brief results to detailed results for each type of image analysis, analyzes the image, and first displays a brief result value whose result value is rapidly derived to a user, and an analysis result value for each type and a depth from the brief contents of each result value to detailed analysis can be controlled through various swipe commands.

### [Technical Solution]

An image analysis server based on deep learning according to the present embodiment includes an image analysis mobile terminal for photographing an image and transmitting the photographed image; and an image analysis server for receiving the photographed image, generating analysis result values through neural networks corresponding to multiple functions, incorporating priorities according to weight into probability values of the generated analysis result values, and providing result values to the image analysis mobile terminal.

According to an embodiment of the present invention, the image analysis server may receive the photographed image, and may generate the analysis result values through an image description neural network, a facial recognition neural network, a text recognition neural network, and other provided and various neural networks.

According to an embodiment of the present invention, the image analysis mobile terminal may display an analysis result value having a highest priority among the analysis result values generated through the image description neural network, the facial recognition neural network, the text recognition neural network and the other provided and various neural networks.

According to an embodiment of the present invention, the image analysis mobile terminal may display the analysis result values in order of higher priority in response to a received swipe command.

An image analysis method based on deep learning according to an embodiment of the present invention includes a first step of photographing, by an image analysis mobile terminal, an image and transmitting the photographed image; a second step of receiving, by an image analysis server, the photographed image and generating analysis result values through neural networks corresponding to multiple functions; and a third step of incorporating, by the image analysis server, priorities according to weight into probability values of the generated analysis result values and providing result values to the image analysis mobile terminal.

According to an embodiment of the present invention, the second step may include receiving, by the image analysis server, the photographed image and generating the analysis result values through an image description neural network, a facial recognition neural network, a text recognition neural network, and other provided and various neural networks.

According to an embodiment of the present invention, the image analysis method may further include a fourth step of displaying, by the image analysis mobile terminal, an analysis result value having a highest priority among the analysis result values generated through the image description neural network, the facial recognition neural network, the text recognition neural network, and the other provided and various neural networks.

According to an embodiment of the present invention, the image analysis method may further include a fifth step of displaying, by the image analysis mobile terminal, the analysis result values in order of higher priority in response to a received swipe command.

An image analysis mobile terminal based on deep learning according to an embodiment of the present invention includes an image photographing unit for photographing an image; a communication unit for transmitting the photographed image to an image analysis server, and receiving, from the image analysis server, results in which priorities according to weight have been incorporated into probability values of analysis result values generated through neural networks corresponding to multiple functions; a touch display unit for receiving display and control commands for information; and a controller for controlling the touch display unit to display an analysis result value having a highest priority among the analysis result values.

According to an embodiment of the present invention, the controller may control the communication unit to display, through a touch display unit, the analysis result value having the highest priority among the analysis result values, which have been received from the image analysis server and into which priorities have been incorporated through an image description neural network, a facial recognition neural network and a text recognition neural network.

According to an embodiment of the present invention, the controller may display the analysis result values in order of higher priority in response to a swipe command received through the touch display unit.

### [Advantageous Effects]

According to an embodiment of the present invention, the image analysis server generates analysis result values through the image description neural network, the facial recognition neural network and the text recognition neural network. The image analysis mobile terminal first displays an analysis result value having the highest priority among the analysis result values generated through the image description neural network, the facial recognition neural network and the text recognition neural network. In this case, the image analysis mobile terminal represents the result value using the least contents in brief so that a user can check the result value within a short time. If the user wants to check the checked result value more specifically, the user inputs a control command, such as a swipe command, in order to check a result value more detailed than the analysis result value.

Accordingly, a user can be provided with deep and various result values whatever the user wants from the first brief contents to more detailed analysis contents for each step through several steps with respect to one analysis result values. As a result, the user can be provided with a result value more rapidly, conveniently and efficiently because the user can select various types of image analysis result values and check them in stages, if necessary.

### [Description of Drawings]

FIGS. 1 and 2 are diagrams for illustrating a common deep learning technology.
FIG. 3 is a concept view of an image analysis server based on deep learning according to an embodiment of the present invention.
FIG. 4 is a concept view of an image analysis mobile terminal based on deep learning according to an embodiment of the present invention.
FIG. 5 is a diagram for illustrating an image analysis method based on deep learning according to an embodiment of the present invention.
FIG. 6 is a diagram for illustrating an image analysis method based on deep learning according to an embodiment of the present invention.
FIGS. 7 and 8 are diagrams for illustrating a method of providing analysis result values of the image analysis method according to an embodiment of the present invention.

### [Mode for Invention]

Hereinafter, embodiments of the present invention are described in detail with reference to the accompanying drawings. However, in describing the embodiments, a detailed description of the known function or element related to the present invention will be omitted if it is deemed to make the gist of the present invention unnecessarily vague. Furthermore, it is to be noted that in the drawings, the size of each element may have been exaggerated and does not correspond to an actual size.

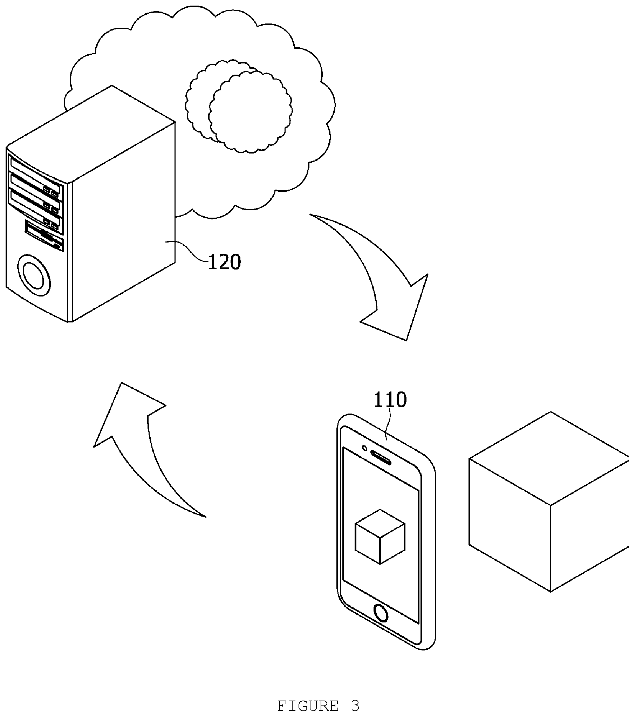

FIG. 3 is a concept view of an image analysis server based on deep learning according to an embodiment of the present invention.

A system based on deep learning according to an embodiment of the present invention is described hereinafter with reference to FIG. 3.

As shown in FIG. 3, the system based on deep learning according to an embodiment of the present invention is configured to include an image analysis mobile terminal 110 and an image analysis server 120.

The image analysis mobile terminal 110 according to an embodiment of the present invention photographs an image to be analyzed and transmits the photographed image.

In this case, the image analysis mobile terminal 110 may be configured with a smart terminal capable of downloading and installing an application. An image analysis application based on deep learning may be downloaded from the image analysis server 120 or a separate application provision server and installed in the image analysis mobile terminal 110.

A user photographs an object, face or text using the image analysis mobile terminal 110, and transmits the photographed image to the image analysis server 120.

In response thereto, the image analysis server 120 analyzes the image received from the image analysis mobile terminal 110.

More specifically, the image analysis server 120 receives the photographed image and generates analysis result values through neural networks corresponding to multiple functions.

In this case, the image analysis server 120 may receive the photographed image and generate the analysis result values through an image description neural network, a facial recognition neural network and a text recognition neural network.

Furthermore, the image analysis server 120 generates result values by incorporating priorities according to weight into probability values of the generated analysis result values. The result values into which the priorities have been incorporated as described above are provided to the image analysis mobile terminal 110.

Accordingly, the image analysis mobile terminal 110 may receive the result values into which the priorities have been incorporated, and may display the result values.

More specifically, the image analysis mobile terminal 110 may display an analysis result value having the highest priority among the analysis result values generated through the image description neural network, the facial recognition neural network and the text recognition neural network, and may display the analysis result values in order of higher priority in response to a command from a user.

That is, the image analysis server 120 derives the results of image recognition through various types of neural networks at a time, assigns priority to each of the result values, and transmits the results values to the image analysis mobile terminal 110. The image analysis mobile terminal 110 displays, to a user, the results values from a result value having the highest priority. Accordingly, the user can be sequentially provided with results having lower priorities by swiping a screen of the image analysis mobile terminal 110.

For example, when the image analysis server 120 generates analysis result values through the image description neural network, the facial recognition neural network and the text recognition neural network, the image analysis mobile terminal 110 first displays an analysis result value having the highest priority among the analysis result values generated by the image analysis server 120 through the image description neural network, the facial recognition neural network and the text recognition neural network. When a user inputs a control command, such as a swipe command, the analysis result values may be displayed in order of higher priority.

Accordingly, according to an embodiment of the present invention, the neural networks of the image analysis server 120 for analyzing a specific image or video at various viewpoints operate at the same time, generate respective result values, and provide the results values to the image analysis mobile terminal 110 of a user at a time. The user can be provided with analysis results by selecting the result values based on their priorities one by one.

Accordingly, there can be provided an image analysis environment having high convenience and efficiency, in which various types of result values can be effectively checked through the result values fed back while the touch display of the image analysis mobile terminal 110 according to an embodiment of the present invention is swiped up and down or left or right.

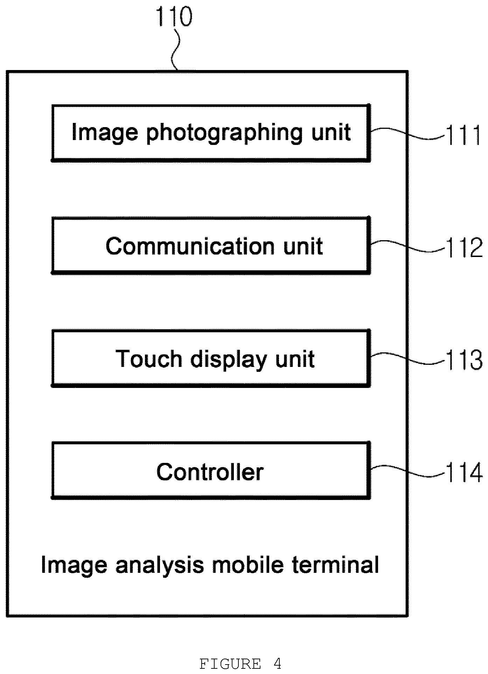

FIG. 4 is a concept view of an image analysis mobile terminal based on deep learning according to an embodiment of the present invention.

The configuration of the image analysis mobile terminal based on deep learning according to an embodiment of the present invention is described hereinafter with reference to FIG. 4.

Referring to FIG. 4, the image analysis mobile terminal 100 based on deep learning according to an embodiment of the present invention is configured to include an image photographing unit 111, a communication unit 112, a touch display unit 113 and a controller 114.

The image photographing unit 111 photographs an image. The communication unit 112 transmits the photographed image to the image analysis server.

Furthermore, the communication unit 112 receives, from the image analysis server, results in which priorities according to weight have been incorporated into probability value of analysis result values generated based on the analysis of neural networks corresponding to multiple functions.

The touch display unit 113 receives display and control commands for information. The controller 114 controls the touch display unit 113 to display an analysis result value having the highest priority among the analysis result values.

More specifically, the controller 114 may control the touch display unit to display an analysis result value having the highest priority among analysis result values, which have been received by the communication unit from the image analysis server and into which priorities have been incorporated through the image description neural network, the facial recognition neural network and the text recognition neural network.

In this case, the controller 114 may display the analysis result values in order of higher priority in response to a swipe command received through the touch display unit 113.

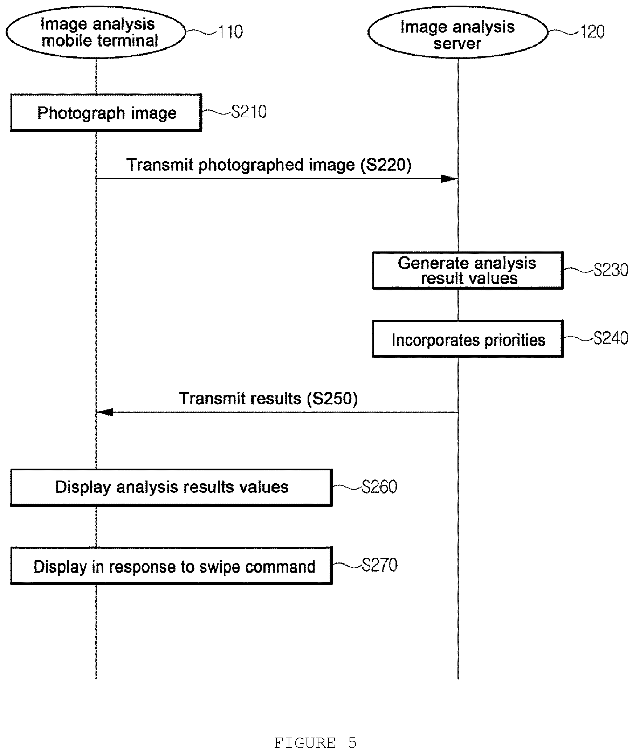

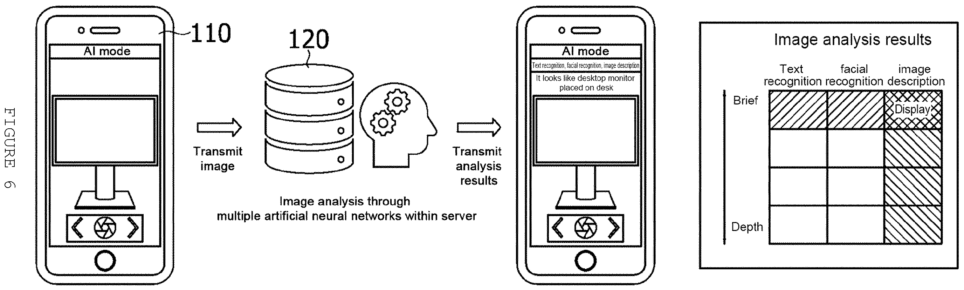

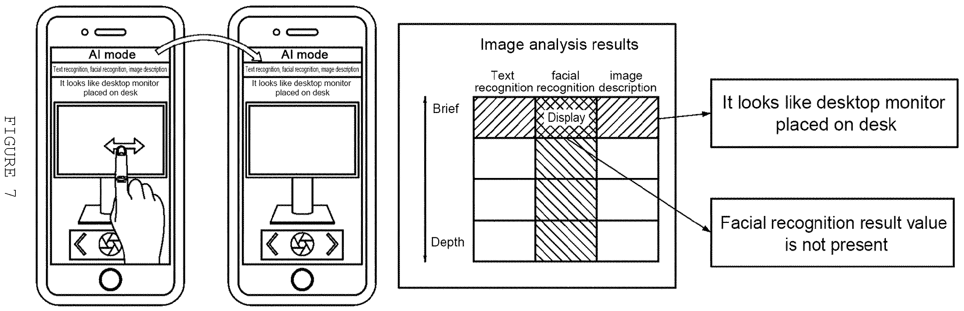

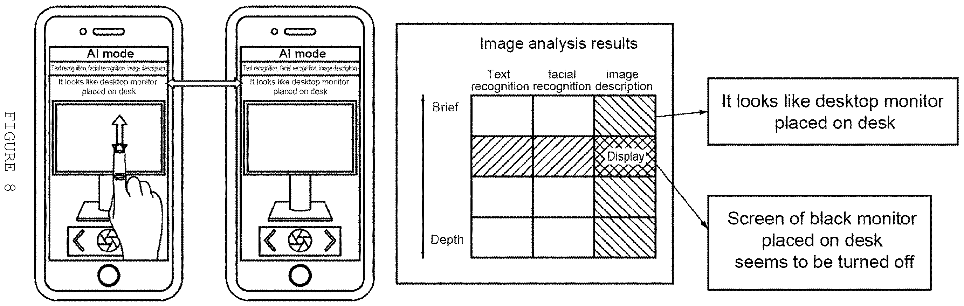

FIGS. 5 and 6 are diagrams for illustrating an image analysis method based on deep learning according to an embodiment of the present invention. FIGS. 7 and 8 are diagrams for illustrating a method of providing analysis result values of the image analysis method according to an embodiment of the present invention.

The image analysis method based on deep learning according to an embodiment of the present invention is described hereinafter with reference to FIGS. 5 to 8.

First, the image analysis mobile terminal 110 photographs an image (S210) and transmits the photographed image to the image analysis server 120 (S220).

Accordingly, the image analysis server 120 receives the photographed image and generates analysis result values through neural networks corresponding to multiple functions (S230).

More specifically, the image analysis server 120 may receive the photographed image, and may generate the analysis result values through multiple artificial neural networks configured with an image description neural network, a facial recognition neural network and a text recognition neural network.

Thereafter, the image analysis server 120 incorporates priorities according to weight to probability values of the generated analysis result values (S240), and transmits results into which the priorities have been incorporated to the image analysis mobile terminal (S250).

Accordingly, the image analysis mobile terminal 110 may display an analysis result value having the highest priority among the analysis result values generated through the image description neural network, the facial recognition neural network and the text recognition neural network (S260) .

Furthermore, when a user inputs a swipe command as a control command, the image analysis mobile terminal 110 may display the analysis result values in order of higher priority.

As described above, according to an embodiment of the present invention, the image analysis server 120 is configured to include various neural networks, such as image description, face recognition and text recognition, and may calculate result values of an image, received from the image analysis mobile terminal 110, through the neural networks, may align the result values in order of higher score, and may provide all the result values to a user by transmitting the result values to the image analysis mobile terminal 110.

Accordingly, the image analysis mobile terminal 110 first displays a result value having the highest score among the result values received from the image analysis server 120. As shown in FIGS. 6 and 7, result values having next priorities can be sequentially checked through a swipe command that moves up and down or left and right on the touch display unit of the image analysis mobile terminal.

More specifically, as in FIG. 7, first, text recognition result values are displayed. When a user inputs an up or down swipe command or inputs a left or right swipe command as in FIG. 8, result values, such as facial recognition and image description, may be sequentially displayed.

That is, image description of a photographed image is first displayed. When a user inputs a swipe command, a facial recognition result value of the image may be displayed. For example, as in FIG. 7, if an image is an image of a desktop monitor on a desk, a description, such as that "it looks like a desktop monitor placed on a desk", may be displayed as the results of image description. When the user inputs a swipe command, a description, such as that a "result value of facial recognition is not present", may be displayed as the results of facial recognition.

In this case, in the embodiment of FIG. 7, analysis results, such as text recognition, facial recognition and image description, may be sequentially displayed through a left or right swipe command. Deep and various results from the first brief analysis results to more detailed analysis contents may be sequentially provided in stages through an up or down swipe command.

Furthermore, in the embodiment of FIG. 8, analysis results, such as text recognition, facial recognition and image description, may be sequentially displayed through an up or down swipe command. Results from the first brief analysis results to more detailed analysis contents may be sequentially provided in stages through a left or right swipe command.

According to an embodiment of the present invention, the image analysis server generates analysis result values through the image description neural network, the facial recognition neural network and the text recognition neural network. The image analysis mobile terminal first displays an analysis result value having the highest priority among the analysis result values generated through the image description neural network, the facial recognition neural network and the text recognition neural network. In this case, the image analysis mobile terminal represents the result value using the least contents in brief so that a user can check the result value within a short time. If the user wants to check the checked result value more specifically, the user inputs a control command, such as a swipe command, in order to check a result value more detailed than the analysis result value.

Accordingly, a user can be provided with deep and various result values whatever the user wants from the first brief contents to more detailed analysis contents for each step through several steps with respect to one analysis result values. As a result, the user can be provided with a result value more rapidly, conveniently and efficiently because the user can select various types of image analysis result values and check them in stages, if necessary. Detailed embodiments have been described in the detailed description of the present invention. However, the present invention may be modified in various ways without departing from the category of the present invention. Accordingly, the technical spirit of the present invention should not be limited to and determined by the above embodiments, but should be defined by the claims and equivalents thereof.

## Claims

1. An image analysis server based on deep learning, comprising:
an image analysis mobile terminal for photographing an image and transmitting the photographed image; and
an image analysis server for receiving the photographed image, generating analysis result values through neural networks corresponding to multiple functions, incorporating priorities according to weight into probability values of the generated analysis result values, and providing result values to the image analysis mobile terminal.

2. The image analysis server of claim 1, wherein the image analysis server receives the photographed image and generates the analysis result values through an image description neural network, a facial recognition neural network and a text recognition neural network.

3. The image analysis server of claim 2, wherein the image analysis mobile terminal displays an analysis result value having a highest priority among the analysis result values generated through the image description neural network, the facial recognition neural network and the text recognition neural network.

4. The image analysis server of claim 3, wherein the image analysis mobile terminal displays the analysis result values in order of higher priority in response to a received swipe command.

5. An image analysis method based on deep learning, comprising:
a first step of photographing, by an image analysis mobile terminal, an image and transmitting the photographed image;
a second step of receiving, by an image analysis server, the photographed image and generating analysis result values through neural networks corresponding to multiple functions; and
a third step of incorporating, by the image analysis server, priorities according to weight into probability values of the generated analysis result values and providing result values to the image analysis mobile terminal.

6. The image analysis method of claim 5, wherein the second step comprises receiving, by the image analysis server, the photographed image and generating the analysis result values through an image description neural network, a facial recognition neural network and a text recognition neural network.

7. The image analysis method of claim 6, further comprising a fourth step of displaying, by the image analysis mobile terminal, an analysis result value having a highest priority among the analysis result values generated through the image description neural network, the facial recognition neural network and the text recognition neural network.

8. The image analysis method of claim 7, further comprising a fifth step of displaying, by the image analysis mobile terminal, the analysis result values in order of higher priority in response to a received swipe command.

9. An image analysis mobile terminal based on deep learning, comprising:
an image photographing unit for photographing an image;
a communication unit for transmitting the photographed image to an image analysis server, and receiving, from the image analysis server, results in which priorities according to weight have been incorporated into probability values of analysis result values generated through neural networks corresponding to multiple functions;
a touch display unit for receiving display and control commands for information; and
a controller for controlling the touch display unit to display an analysis result value having a highest priority among the analysis result values.

10. The image analysis mobile terminal of claim 9, wherein the controller controls the communication unit to display, through a touch display unit, the analysis result value having the highest priority among the analysis result values, which have been received from the image analysis server and into which priorities have been incorporated through an image description neural network, a facial recognition neural network and a text recognition neural network.

11. The image analysis mobile terminal of claim 9, wherein the controller displays the analysis result values in order of higher priority in response to a swipe command received through the touch display unit.
